# EUROPÄISCHE PATENTSCHRIFT

(11) **EP 3 712 569 B1**
(45) Veröffentlichungstag und Bekanntmachung des Hinweises auf die Patenterteilung: **20.01.2021**
(21) Anmeldenummer: 19164521.7
(22) Anmeldetag: 22.03.2019
(51) Int. Cl.: G01D 18/00, G01D 5/14

(54) **KALIBRIEREN EINES MAGNET-POSITIONSSENSORS**
CALIBRATION OF A MAGNETIC POSITION SENSOR
ÉTALONNAGE D'UN CAPTEUR DE POSITION MAGNÉTIQUE

(43) Veröffentlichungstag der Anmeldung: 23.09.2020
(73) Patentinhaber: SICK AG, 79183 Waldkirch (DE)
(72) Erfinder: Zöllin, Jochen, 79379 Müllheim (DE); Bludau, Thomas, 79111 Denzlingen (DE); Lotze, Niklas, 79100 Freiburg (DE); Machul, Olaf, 79294 Sölden (DE)

(56) Entgegenhaltungen:
- WO-A1-96/41120
- WO-A1-2007/087705
- DE-B4- 19 914 447
- US-A- 4 771 237

## Beschreibung

Die Erfindung betrifft ein Verfahren zum Kalibrieren eines Magnet-Positionssensors nach dem Oberbegriff von Anspruch 1 sowie einen entsprechend kalibrierbaren Magnet-Positionssensor.

Derartige Magnet- oder Magnetfeldsensoren werden zur genauen Bestimmung einer Aktorposition durch berührungsloses Erfassen der Stellung eines Kolbens vornehmlich in Pneumatik- oder Hydraulikantrieben eingesetzt, wie Zylinder, Greifer oder Linearmodule. Ein Magnet ist auf dem Kolben mitbewegt montiert, und der mit der Position wechselnde Einfluss seines Magnetfeldes wird gemessen.

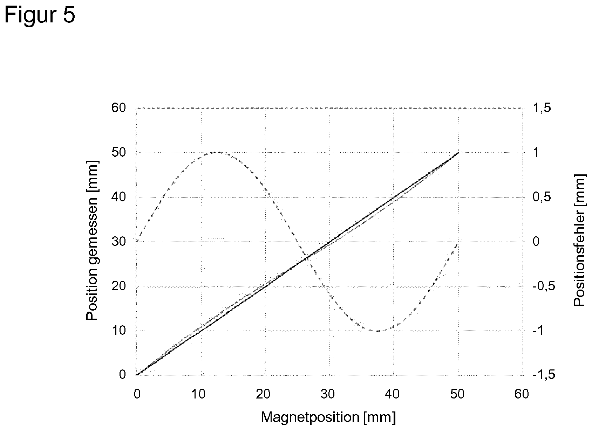

Die Positionsbestimmung ist typischerweise mit einem gewissen Linearitätsfehler behaftet. Figur 5 illustriert die verbleibende Nichtlinearität eines Magnet-Positionssensors. Die dunkle durchgezogene Linie entspricht einem ideal linearen Verlauf der gemessenen Position in Abhängigkeit von der Magnetposition. Die etwas hellere dunkle Linie der tatsächlich ausgegebenen Position des Magnetfeld-Positionssensors zeigt eine leichte Schwingung um den idealen Verlauf herum. Der entsprechende Positionsfehler, also die Differenz zwischen idealer und gemessener Position, ist nochmals in vergrößerter Skalierung mit einer gestrichelten Linie dargestellt. Der Linearitätsfehler lässt sich auf verschiedene Ursachen zurückführen, wie Fitfunktionen, welche die Realität nicht ausreichend genau abbilden oder abbilden können, aber auch eine im System aus Antrieb und Sensor bedingte Nichtlinearität.

Für einige Anwendungen beispielsweise im Automatisierungs- und Handlingbereich reichen die mit herkömmlichen Magnet-Positionssensoren erreichten Genauigkeiten nicht aus. So können nur leicht verschieden große Objekte oder leicht unterschiedliche Positionen nicht zuverlässig voneinander unterschieden beziehungsweise angefahren werden. Teilweise ließe sich mit sehr teuren Wegmesssystemen Abhilfe schaffen, jedoch nur mit dem offensichtlichen Nachteil der hohen Kosten.

Die DE199 14 447 B4 offenbart einen selbstkalibrierenden Positionsmesswandler, der Messwandlersignale als periodische Funktion zwischen Lesekopf und Maßstab erzeugt und unter Verwendung von gespeicherten Kalibrierungswerten korrigiert, wobei diese Kalibrierungswerte angepasst werden. Der Positionsmesswandler arbeitet mit zwei periodischen Messsignalen und damit einem ganz anderen Grundprinzip als ein Magnet-Positionssensor.

Die EP 1 052 481 A2 befasst sich dem Kalibrieren eines absoluten Positionsencoders. Erneut ist das Funktionsprinzip mit grober und feiner Skala oder sogar noch mehr Skalen sehr verschieden von einem Magnet-Positionssensor.

Aus der WO 96/41 120 A1 ist ein Positionssensor mit einem Hall-IC bekannt. In einer Kalibrierung wird an mehreren Winkelpositionen das Ausgangssignal mit idealen Werten verglichen, und die Abweichung wird für die spätere Kompensation gespeichert.

Die WO 2007/087705 A1 befasst sich mit der Kalibrierung eines absoluten Positionssensors. Hier werden an einer Vielzahl von Winkelpositionen die gemessenen Winkelpositionen mit denjenigen eines Referenzsensors verglichen, und die Differenz wird als Fehlerkorrekturfaktor verwendet.

Es ist daher Aufgabe der Erfindung, die Messung mit einem gattungsgemäßen Magnet-Positionssensor zu verbessern.

Diese Aufgabe wird durch ein Verfahren zum Kalibrieren eines Magnet-Positionssensors nach Anspruch 1 sowie einen mit dem Verfahren kalibrierbaren Magnet-Positionssensor nach Anspruch 10 gelöst. Ein gattungsgemäßer Magnet-Positionssensor bestimmt die Position eines verfahrbaren Schiebeelements, insbesondere Kolbens, gegenüber seinem Gehäuse. Das Gehäuse steht dabei stellvertretend für einen beliebigen nicht mit dem Kolben mitbewegten Teil des Sensors, die Umrechnung zu irgendeinem anderen stationären Sensorteil wäre durch eine Konstante leicht zu bewerkstelligen. In der Regel ist ein Magnet auf dem Schiebeelement montiert, dessen mit der Position veränderliches Magnetfeld mit einem entsprechenden stationären Sensor gemessen wird, wie einem Hall-Sensor. Die Anordnung ist prinzipiell umkehrbar, aber wegen der elektrischen Verbindungen zu einem beweglichen Teil nicht üblich.

Die Erfindung geht von dem Grundgedanken aus, nacheinander mehrere Kalibrationspositionen oder Kalibrationspunkte anzufahren. Dazu wird das Schiebelement gezielt in jeweils eine von mehreren bekannten Positionen gebracht. Die dort gemessene Position wird mit der bekannten Position verglichen und eine Positionsdifferenz bestimmt. Das ist der Linearitätsfehler an dieser Position, und dieser wird im späteren Betrieb kompensiert. Damit ist die Positionsausgabe zumindest an den Kalibrationspositionen bei künftigen Messungen exakt, natürlich nur im Rahmen von unvermeidlichen Toleranzen wie der Positionierungsungenauigkeit während des Kalibrierens.

Die Erfindung hat den Vorteil, dass ein deutlich verbessertes lineares Verhalten und ein entsprechend kleinerer Positionsfehler erreicht werden. Dazu ist auch keine aufwändige manuelle Linearisierung in einer dem Magnet-Positionssensor übergeordneten Steuerung notwendig. Eine spezifische Linearisierung an einer Kombination von Antrieb und Sensor ist erfindungsgemäß einfach, schnell und damit auch günstig möglich.

Der Magnet-Positionssensor ist bevorzugt während des Kalibrierens bereits in die spätere Anwendung eingebaut, insbesondere mit einem Aktor verbunden, dessen Position gemessen werden soll. Auf diese Weise werden gerade diejenigen Nichtlinearitäten kompensiert, die auf die konkrete Anwendung zurückgehen, etwa Positionierungsungenauigkeiten des Aktors. So wird ein einfacher, sensor- und antriebsspezifischer Abgleich im montierten Zustand vorgenommen.

Das Schiebeelement wird vorzugsweise mehrfach in die Kalibrationspositionen gebracht, und die dabei bestimmten Positionsdifferenzen werden statistisch zu einer Kompensation für künftige Messungen verrechnet. In dieser Ausführungsform werden nicht nur mehrere Kalibrationspositionen angefahren, sondern zumindest einige, bevorzugt alle Kalibrationspositionen auch mehrfach. Dadurch können Toleranzen ausgemittelt werden, und so wird der Linearitätsfehler noch weiter verringert.

Die Kalibrierung wird bevorzugt bei einer anderen Temperatur wiederholt und ergänzt. Die Wiederholung ist also nicht im Sinne eines Verwerfens, sondern Verfeinerns der bisherigen Kalibrierung zu verstehen. Besonders genau wird eine temperaturspezifische Kalibrierung, wenn gezielt auf bestimmte Temperaturen geheizt und die Temperatur auch im Betrieb gemessen wird. Es kann aber schon eine Verbesserung sein, lediglich für unterschiedliche Temperaturen zu sorgen, etwa durch eine Kalbrationsmessung direkt nach dem Hochfahren einer Anlage und eine ergänzende Kalbrationsmessung nach längerem Betrieb. Damit ist die Kalibrierung zwar nicht temperaturspezifisch, berücksichtigt aber immerhin durch breitere Datengrundlage den relevanten Temperaturbereich.

Für Messungen nach der Kalibrierung wird bevorzugt stückweise zwischen den Kalibrationspositionen linear interpoliert. Folglich wird in den Kalibrationspositionen die aus der Kalibrierung bekannte Position ausgegeben, und zwischen je zwei Kalibrationspositionen der ja durch die Kalibrierung bekannte Bereich des Sensorsignals linear aufgeteilt. Da die Kalibrationspositionen zueinander einen deutlich kleineren Abstand haben als der gesamte Messbereich, wird auf diese Weise der verbleibende Linearitätsfehler erheblich reduziert.

Ein mit dem Magnet-Positionssensor verbundener Aktor wird vorzugsweise in Anschlag mit einem Kalibrationsstück gebracht, das Abstandsstrukturen entsprechend den gewünschten Kalibrationspositionen aufweist. Beispielsweise schlägt ein mit dem Magnet-Positionssensor verbundener Aktor je Kalibrationsposition an bestimmten Abstandsstrukturen an. Damit wird das Anfahren der Kalibrationspositionen erheblich vereinfacht, und zugleich werden die Kalibrationspositionen mit hoher Genauigkeit eingenommen.

Die Abstandsstruktur weist vorzugsweise eine Treppenstruktur auf. Die Stufen haben eine gewisse Breite, und so kann über laterale Berührungsflächen eine bestimmte Stufe und damit Kalibrationsposition gewählt werden, während über die Höhen der Stufen die Kalibrationsposition festgelegt ist. Ein Beispiel ist ein Greifer mit unterschiedlicher radialer Einstellung, der dementsprechende innere oder äußere Stufen berührt.

Das Kalibrieren wird vorzugsweise in dem Magnet-Positionssensor durch einen Teachbefehl ausgelöst. Für den Anwender ist es damit ganz einfach möglich, den Magnet-Positionssensor passend zu kalibrieren. Besonders bevorzugt ist dafür ein Teachknopf vorgesehen. Alternativ ist auch das Auslösen per Remotebefehl beispielsweise über IO-Link oder eine sonstige Schnittstelle denkbar.

Das Kalibrieren wird von dem Magnet-Positionssensor dadurch ausgelöst, dass der Magnet-Positionssensor das Muster beim Anfahren von Kalibrationspositionen erkennt. Anstelle eines Teachbefehls kann der Magnet-Positionssensor auch selbst eine Kalibrierung auslösen. Das charakteristische Anfahren der Kalibrationspositionen kommt im normalen Betrieb zumindest bei hinreichend vielen Kalibrationspositionen nicht vor, und so kann der Magnet-Positionssensor erkennen, dass eine Kalibrierung vorgenommen werden soll. In diesem Zusammenhang kann es sinnvoll sein, einen Puffer für eine gewisse Historie von zuvor gemessenen Positionen vorzuhalten, damit die Kalibrationspositionen, die schon angefahren waren, ehe das Muster erkannt wurde, auch noch für das Kalibrieren ausgenutzt werden können.

In dem Magnet-Positionssensor kann vorzugsweise eine Sperre gesetzt werden, damit das Kalibrieren nicht ausgelöst wird. Dadurch kann eine bereits erreichte Kalibrierung nicht ungewollt verlorengehen. Das ist besonders sinnvoll im Zusammenhang mit einer eigenständigen Erkennung des Musters der angefahrenen Kalibrationspositionen, aber auch ein versehentlicher Teachbefehl wird so unterdrückt.

Das Verfahren zum Kalibrieren läuft vorzugsweise intern im Magnet-Positionssensor ab. Es wird also schon innerhalb des Magnet-Positionssensors während des Kalibrierens die erforderliche Kompensation bestimmt und später im Betrieb kompensiert. Der Magnet-Positionssensor gibt selbst schon die Positionswerte mit verbesserter Linearität aus. Natürlich müssen die Kalibrationspositionen noch extern angefahren werden, auf die Aktorik hat der Magnet-Positionssensor in der Regel keinen Einfluss. Der Magnet-Positionssensor kann aber sehr wohl selbständig erkennen, wann Kalibrationspositionen erreicht sind, so groß sind auch die unkalibrierten Positionsfehler nicht. Eine umständliche Kalibrierung über eine angeschlossene programmierbare Steuerung oder dergleichen, an die zunächst die Positionswerte noch mit Linearitätsfehler übergeben und die erst dort kompensiert werden, ist damit nicht erforderlich.

Ein erfindungsgemäßer Magnet-Positionssensor weist ein Gehäuse und ein gegenüber dem Gehäuse linear bewegliches Schiebeelement, einen Magneten und einen Magnetsensor, die bei Bewegung des Schiebeelements ihre lineare Position zueinander verändern sowie eine Steuer- und Auswertungseinheit auf, die dafür ausgebildet ist, anhand eines Sensorsignals des Magnetsensors die lineare Position des Schiebeelements zu bestimmen und das erfindungsgemäße Verfahren zum Kalibrieren durchzuführen.

Der Magnet-Positionssensor weist bevorzugt einen Teach-Knopf zum Auslösen des Kalibrierens auf. Im dann begonnenen Teach-Modus wartet der Magnet-Positionssensor jeweils auf das Anfahren einer Kalibrationsposition und bestimmt dort den Linearitätsfehler, der dann später im Betrieb korrigiert wird.

Die Steuer- und Auswertungseinheit ist dafür ausgebildet, das Anfahren von Kalibrationspositionen zu erkennen und daraufhin das Kalibrieren auszulösen. Das ist eine AIternative zu einer Benutzereingabe mit Teachbefehl, mit den oben schon beschriebenen Vorteilen.

In vorteilhafter Weiterbildung ist eine Anordnung aus einem erfindungsgemäßen Magnet-Positionssensor und einem Kalibrationsstück vorgesehen, das Abstandsstrukturen entsprechend den gewünschten Kalibrationspositionen aufweist. Damit wird die Kalibrierung wie schon für das Verfahren beschrieben, präziser und zugleich vereinfacht.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine vereinfachte Blockdarstellung eines Magnet-Positionssensors;
- Fig. 2: ein Kalibrationsstück zur Unterstützung einer Kalibrierung des Magnet-Positionssensors;
- Fig. 3: eine Darstellung des Positionsfehlers in Abhängigkeit von der Magnetposition und von dessen Verringerung durch die erfindungsgemäße Kalibrierung;
- Fig. 4: eine Darstellung gemäß Figur 3 mit zur Illustrationszwecken um einen Faktor zehn überhöhtem Positionsfehler; und
- Fig. 5: eine Darstellung des Positionsfehlers in Abhängigkeit von der Magnetposition bei einem nicht kalibrierten Magnet-Positionssensor.

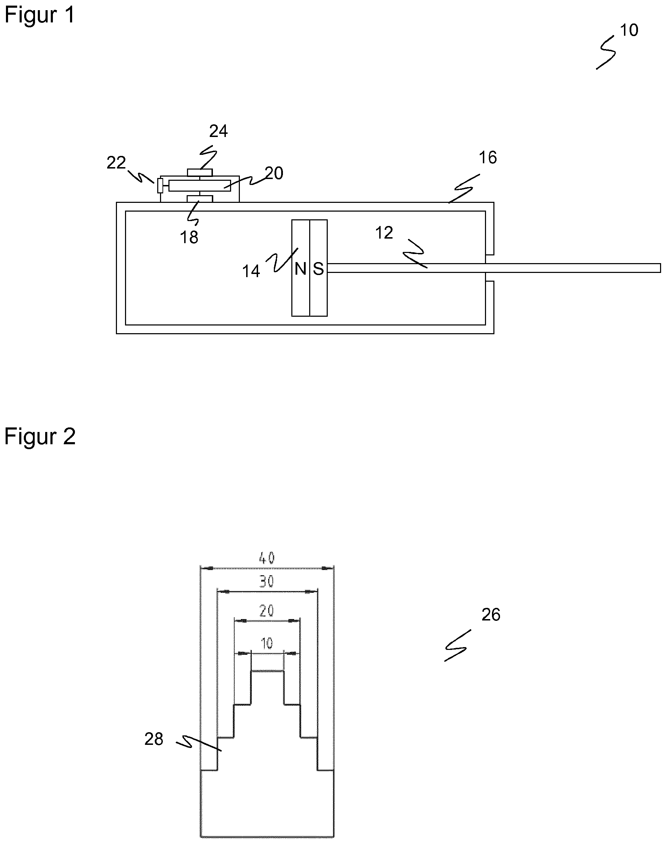

Figur 1 zeigt eine vereinfachte Blockdarstellung eines Magnet-Positionssensors 10. Der anhand Figur 1 erläuterte Aufbau ist rein beispielhaft und soll nur das Funktionsprinzip eines Magnet-Positionssensors 10 erläutern. Aufgabe des Magnet-Positionssensors 10 ist, die Position eines hier als Kolben 12 ausgebildeten Schiebeelements berührungslos anhand eines daran befestigten Magneten 14 zu bestimmen. Der Kolben 12 ist Teil eines Gehäuses 16, beispielsweise eines Pneumatikzylinders eines Roboters, eines Greifers oder dergleichen industriellen Maschine.

An dem Gehäuse 16 ist ein magnetfeldempfindliches Sensorelement 18 vorgesehen, beispielsweise ein Hall-Sensorelement. Das Sensorelement 18 liefert ein Mess- oder Sensorsignal mit einem von der Position des Magneten 14 abhängigen Verlaufs. Eine Steuer- und Auswertungseinheit 20 bestimmt aus dem Sensorsignal die Position und stellt sie an einem Ausgang 22 bereit. Alternativ zu einem Positionssignal kann auch ein Schaltsignal bei Erreichen oder Überschreiten einer bestimmten Position ausgegeben werden. Der Magnet-Positionssensor 10 kann zudem Bedienelemente aufweisen, wobei hier beispielhaft ein Teachknopf 24 gezeigt ist.

Das Positionssignal weist, wie einleitend anhand der Figur 5 schon erläutert, einen Linearitätsfehler auf, der erfindungsgemäß durch Kalibrieren vorzugsweise im montierten Zustand des Magnet-Positionssensors 10 in seiner späteren Anwendung weitgehend eliminiert oder jedenfalls verringert wird. Während des Kalibrierens wird der Kolben 12 nacheinander in mehrere feste Kalibrationspositionen gebracht und dort das Sensorsignal gemessen.

Um diesen Kalibriervorgang zu unterstützen, wird vorzugsweise ein Kalibrationsstück 26 eingesetzt, wobei eine beispielhafte Ausführungsform eines Kalibrationsstücks 26 in Figur 2 gezeigt ist. Dieses beispielhafte Kalibrationsstück 26 weist ein vorgegebenes Raster von Stufen 28 auf, das für einen Zweifinger-Außengreifer geeignet ist. Die radiale Einstellung des Greifers bestimmt, an welcher Stufe es zum Anschlag kommt, während die Höhe der entsprechenden Stufe die Kalibrationsposition festlegt.

Das Kalibrationsstück 26 kann je nach Anforderung und Messbereich angepasst und beispielsweise in unterschiedlichen Auflösungen, d.h. Anzahlen und Abständen von Stufen sowie umfasster Messbereich angeboten werden. Auch eine an der Spitze zusammenlaufende Stufenstruktur darf nur als Beispiel verstanden werden. Für eine andere Aktorik, wie einen Innengreifer, einen Pneumatikzylinder oder einen Greifer mit mehr als zwei Fingern, wird eine sinngemäß übertragene andere Struktur erforderlich sein.

Für das erfindungsgemäße Kalibrierverfahren wird zunächst der Magnet-Positionssensor 10 in einen Kalibrier- oder Linearisierungsmodus versetzt. Das wird über den Teachknopf 24 ausgelöst, alternativ über einen Teachbefehl mittels einer Schnittstelle wie IO-Link oder eine Drahtlosschnittstelle, einen Bus oder dergleichen. Vorgesehen ist auch, dass die Steuer- und Auswertungseinheit 20 selbst anhand des Musters der nacheinander angefahrenen Kalibrationspositionen erkennt, dass eine Kalibrierung stattfindet, und sich in den entsprechenden Modus versetzt. Um Verwechslungen mit dem Regelbetrieb besonders unwahrscheinlich zu machen, können die Kalibrationspositionen in möglichst ungewöhnlicher Abfolge angefahren werden. Außerdem ist denkbar, den automatischen Kalibriermodus vorübergehend zu sperren, etwa im Anschluss an eine erfolgte Kalibrierung, um eine unerwünschte erneute Kalibrierung auszuschließen.

Im Kalibriermodus wartet die Steuer- und Auswertungseinheit 20 jeweils auf das Anfahren der nächsten Kalibrationsposition. Dort wird jeweils die Position gemessen, der Fehler bezüglich der bekannten Kalibrationsposition bestimmt und bei künftigen Messungen im Betrieb korrigiert. Damit werden danach im Betrieb die Kalibrationspositionen exakt gemessen, jedenfalls abgesehen von Toleranzen beispielsweise beim Anfahren der Kalibrationsposition während des Kalibrierens. Positionen zwischen den Kalibrationspositionen werden vorzugsweise linear interpoliert. Ein gleichmäßiges Raster aus Kalibrationspositionen, etwa bei 0 mm, 10 mm, 20 mm, ..., wie auch von dem beispielhaften Kalibrationsstück 26 der Figur 2 unterstützt, wird in vielen Fällen besonders geeignet sein, aber es sind dennoch auch unregelmäßige Raster möglich.

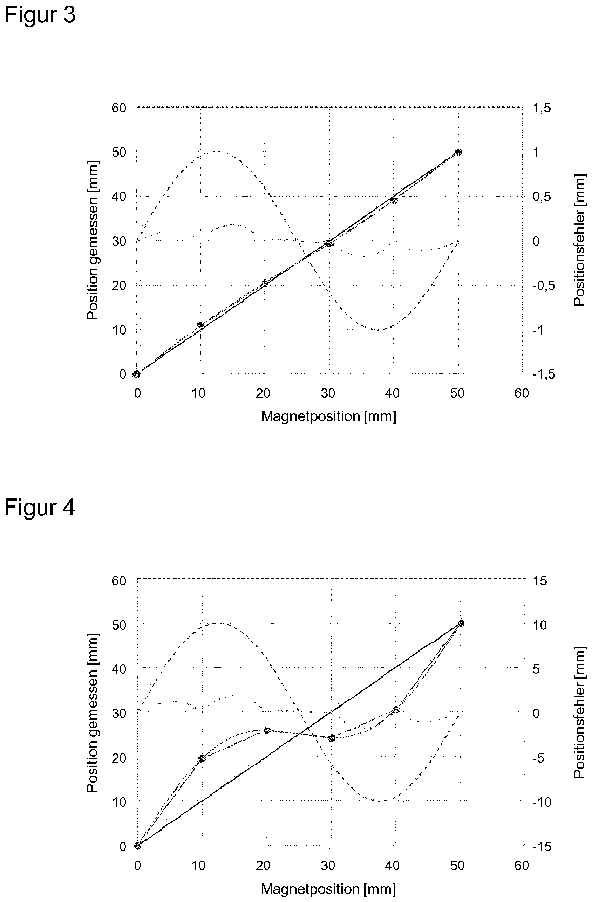

Figur 3 illustriert die verbesserte Linearität beziehungsweise den durch das Kalibrieren reduzierten Positionsfehler. Figur 4 ist im Prinzip die gleiche Darstellung, jedoch ist hier der Fehler zur besseren Veranschaulichung um einen Faktor zehn überhöht.

Ähnlich wie in Figur 5 zeigt jeweils die dunkle durchgezogene Linie die ideal linear verlaufende gemessene Position in Abhängigkeit von der Magnetposition. Die mit hellerer durchgezogener Linie dargestellten tatsächlich gemessenen Positionen weisen noch den zu korrigierenden Linearitätsfehler auf, der durch die dunkle gestrichelte Linie auch einzeln dargestellt wird und in diesem Beispiel grob einer einzelnen Sinusschwingung entspricht.

Mit kleinen Kreisen sind die Kalibrationspositionen gekennzeichnet. An den Kalibrationspositionen verschwindet der Linearitätsfehler, und dazwischen wird stückweise linear interpoliert. Wie die hellere gestrichelte Linie zeigt, gibt es noch einen Restfehler zwischen den Kalibrationspositionen, der aber im Vergleich zu dem ursprünglichen Linearitätsfehler in seiner maximalen Ausprägung ganz erheblich reduziert ist. Durch zusätzliche Kalibrationspositionen lässt sich der Restfehler weiter verringern.

Es ist vorstellbar, den Kalibriervorgang mehrfach zu durchlaufen, um die Wiederholgenauigkeit herauszurechnen. Auch ist denkbar, mehrfach bei verschiedenen Temperaturen zu kalibrieren, um den späteren Betriebstemperaturbereich besser abzudecken. Das geschieht entweder aufwändig mit einer zweidimensionalen Kalibrierung und Kompensation für jeweils bekannte Temperatur, oder einfacher durch Kalibrieren in unterschiedlichen Situationen, damit die Kompensation auf breiterer Temperaturbasis fußt. Im Prinzip kann die Kalibrierung auch extern erfolgen, d.h. anstelle der eigenen Steuer- und Auswertungseinheit 20 nimmt eine externe programmierbare Steuerung oder dergleichen die Messungen während der Kalibrierung und die anschließende Korrektur im Betrieb vor. Erheblich benutzerfreundlicher ist jedoch die beschriebene Kalibrierung durch den Magnet-Positionssensor 10 selbst.

## Patentansprüche

1. Verfahren zum Kalibrieren eines Magnet-Positionssensors (10), der die Position eines linear verfahrbaren Schiebeelements (12) gegenüber einem Gehäuse (16) des Magnet-Positionssensors (10) bestimmt, wobei das Schiebeelement (12) nacheinander in mehrere bekannte Kalibrationspositionen gebracht, die dort von dem Magnet-Positionssensor (10) gemessene Position mit der bekannten Kalibrationsposition verglichen und jeweils eine Positionsdifferenz bestimmt wird, die bei künftigen Messungen kompensiert wird,
**dadurch gekennzeichnet,**
**dass** das Kalibrieren von dem Magnet-Positionssensor (10) dadurch ausgelöst wird, dass der Magnet-Positionssensor (10) ein Muster nacheinander angefahrener Kalibrationspositionen erkennt.

2. Verfahren nach Anspruch 1,
wobei der Magnet-Positionssensor (10) während des Kalibrierens bereits in die spätere Anwendung eingebaut, insbesondere mit einem Aktor verbunden ist, dessen Position gemessen werden soll.

3. Verfahren nach Anspruch 1 oder 2,
wobei das Schiebeelement (12) mehrfach in die Kalibrationspositionen gebracht und die dabei bestimmten Positionsdifferenzen statistisch zu einer Kompensation für künftige Messungen verrechnet werden.

4. Verfahren nach einem der vorhergehenden Ansprüche,
wobei die Kalibrierung bei einer anderen Temperatur wiederholt und ergänzt wird.

5. Verfahren nach einem der vorhergehenden Ansprüche,
wobei für Messungen nach der Kalibrierung stückweise zwischen den Kalibrationspositionen linear interpoliert wird.

6. Verfahren nach einem der vorhergehenden Ansprüche,
wobei ein mit dem Magnet-Positionssensor (10) verbundener Aktor in Anschlag mit einem Kalibrationsstück (26) gebracht wird, das Abstandsstrukturen (28) entsprechend den gewünschten Kalibrationspositionen aufweist.

7. Verfahren nach Anspruch 6,
wobei die Abstandsstruktur (28) eine Treppenstruktur aufweist.

8. Verfahren nach einem der vorhergehenden Ansprüche,
wobei das Kalibrieren in dem Magnet-Positionssensor (10) durch einen Teachbefehl ausgelöst wird.

9. Verfahren nach einem der vorhergehenden Ansprüche, wobei das Verfahren zum Kalibrieren intern im Magnet-Positionssensor (10) abläuft.

10. Magnet-Positionssensor (10) mit einem Gehäuse (16) und einem gegenüber dem Gehäuse (16) linear beweglichen Schiebeelement (12), mit einem Magneten (14) und einem Magnetsensor (18), die bei Bewegung des Schiebeelements (12) ihre lineare Position zueinander verändern, und mit einer Steuer- und Auswertungseinheit (20), die dafür ausgebildet ist, anhand eines Sensorsignals des Magnetsensors (18) die lineare Position des Schiebeelements (12) zu bestimmen,
**dadurch gekennzeichnet,**
**dass** die Steuer- und Auswertungseinheit (20) zur Durchführung eines Verfahrens zum Kalibrieren nach einem der vorhergehenden Ansprüche eingerichtet ist.

11. Magnet-Positionssensor (10) nach Anspruch 10, der einen Teach-Knopf (24) zum Auslösen des Kalibrierens aufweist.

12. Magnet-Positionssensor (10) nach einem der Ansprüche 10 oder 11, umfassend eine setzbare Sperre, wobei das Kalibrieren nicht ausgelöst wird, wenn die Sperre gesetzt ist.

13. Anordnung aus einem Magnet-Positionssensor (10) nach einem der Ansprüche 10 bis 12 und einem Kalibrationsstück (26), das Abstandsstrukturen (28), insbesondere eine Treppenstruktur, entsprechend den gewünschten Kalibrationspositionen aufweist.

## Claims

1. A method for calibrating a magnetic position sensor (10) that determines the position of a linearly movable sliding element (12) relative to a housing (16) of the magnetic position sensor (10), wherein the sliding element (12) is successively brought into several known calibration positions, the respective position measured by the magnetic position sensor (10) is compared with the known calibration position and in each case a position difference is determined which is compensated for in future measurements,
**characterized in that** the calibration is triggered by the magnetic position sensor (10) **in that** the magnetic position sensor (10) recognizes a pattern of calibration positions it is successively brought into.

2. The method according to claim 1,
wherein the magnetic position sensor (10) is already built into the later application during calibration, in particular is connected to an actuator whose position is to be measured.

3. The method according to claim 1 or 2,
wherein the sliding element (12) is brought into the calibration positions a plurality of times, and the position differences thus determined are statistically evaluated to a compensation for future measurements.

4. The method according to any of the preceding claims,
wherein the calibration is repeated and supplemented at a different temperature.

5. The method according to any of the preceding claims,
wherein linear interpolation is carried out between the calibration positions for measurements after calibration.

6. The method according to any of the preceding claims,
wherein an actuator connected to the magnetic position sensor (10) is moved up against a calibration piece (26) having spacer structures (28) corresponding to the desired calibration positions.

7. The method according to claim 6,
wherein the spacer structure (28) has a staircase structure.

8. The method according to any of the preceding claims,
wherein the calibration in the magnetic position sensor (10) is triggered by a teach command.

9. The method according to any of the preceding claims,
wherein the method for calibration is carried out internally in the magnetic position sensor (10).

10. A magnetic position sensor (10) having a housing (16) and a sliding element (12) which can be moved linearly with respect to the housing (16), having a magnet (14) and a magnetic sensor (18) that change their linear position with respect to one another when the sliding element (12) is moved, and having a control and evaluation unit (20) which is configured to determine the linear position of the sliding element (12) on the basis of a sensor signal from the magnetic sensor (18),
**characterized in that** the control and evaluation unit (20) is configured to carry out a method for calibrating according to any of the preceding claims.

11. The magnetic position sensor (10) according to claim 11,
having a teach button (24) for triggering the calibrating.

12. The magnetic position sensor (10) according to claim 10 or 11,
comprising a lock that can be set, wherein the calibrating is not triggered if the lock is set.

13. An arrangement comprising a magnetic position sensor (10) according to any of claims 10 to 12 and a calibration piece (26) having spacer structures (28), in particular a staircase structure, corresponding to the desired calibration positions.

## Revendications

1. Procédé d'étalonnage d'un capteur magnétique de position (10) qui détermine la position d'un élément coulissant (12) mobile linéairement par rapport à un boîtier (16) du capteur magnétique de position (10), dans lequel l'élément coulissant (12) est amené successivement dans plusieurs positions d'étalonnage connues, la position mesurée à cet endroit par le capteur magnétique de position (10) est comparée à la position d'étalonnage connue, et une différence de position est déterminée, qui est compensée lors de mesures futures,
**caractérisé en ce que**
l'étalonnage est déclenché par le capteur magnétique de position (10) par le fait que le capteur magnétique de position (10) reconnaît un motif de positions d'étalonnage desservies successivement.

2. Procédé selon la revendication 1,
dans lequel pendant l'étalonnage, le capteur magnétique de position (10) est déjà installé dans l'application ultérieure, en particulier est relié à un actionneur dont la position doit être mesurée.

3. Procédé selon la revendication 1 ou 2,
dans lequel l'élément coulissant (12) est amené plusieurs fois dans les positions d'étalonnage, et les différences de position ainsi déterminées sont statistiquement prises en compte dans le calcul pour compenser des mesures futures.

4. Procédé selon l'une des revendications précédentes,
dans lequel l'étalonnage est répété et complété à une température différente.

5. Procédé selon l'une des revendications précédentes,
dans lequel pour les mesures après étalonnage, une interpolation linéaire est effectuée individuellement entre les positions d'étalonnage.

6. Procédé selon l'une des revendications précédentes,
dans lequel un actionneur relié au capteur magnétique de position (10) est mis en butée avec une pièce d'étalonnage (26) ayant des structures d'écartement (28) correspondant aux positions d'étalonnage souhaitées.

7. Procédé selon la revendication 6,
dans lequel la structure d'écartement (28) présente une structure en escalier.

8. Procédé selon l'une des revendications précédentes,
dans lequel l'étalonnage est déclenché par un ordre d'apprentissage dans le capteur magnétique de position (10).

9. Procédé selon l'une des revendications précédentes,
dans lequel le procédé d'étalonnage se déroule en interne dans le capteur magnétique de position (10).

10. Capteur magnétique de position (10) comportant un boîtier (16) et un élément coulissant (12) mobile linéairement par rapport au boîtier (16), un aimant (14) et un capteur magnétique (18) qui modifient leur position linéaire l'un par rapport à l'autre lors d'un mouvement de l'élément coulissant (12), et une unité de commande et d'évaluation (20) qui est réalisée pour déterminer la position linéaire de l'élément coulissant (12) sur la base d'un signal du capteur magnétique (18),
**caractérisé en ce que**
l'unité de commande et d'évaluation (20) est conçue pour mettre en œuvre un procédé d'étalonnage selon l'une des revendications précédentes.

11. Capteur magnétique de position (10) selon la revendication 10, comportant un bouton d'apprentissage (24) pour déclencher l'étalonnage.

12. Capteur magnétique de position (10) selon l'une des revendications 10 ou 11, comportant un blocage applicable, l'étalonnage n'état pas déclenché lorsque le blocage est appliqué.

13. Ensemble constitué d'un capteur magnétique de position (10) selon l'une des revendications 10 à 12 et d'une pièce d'étalonnage (26) qui présente des structures d'écartement (28), en particulier une structure en escalier, correspondant aux positions d'étalonnage souhaitées.
